# EUROPEAN PATENT APPLICATION

(11) **EP 2 071 876 A1**
(43) Date of publication of application: **17.06.2009**
(21) Application number: 07024196.3
(22) Date of filing: 13.12.2007
(51) Int. Cl.: H04W 4/00

(54) **Mobile telephone and method for providing positional information by a mobile telephone.**

(71) Applicant: Koninklijke KPN N.V., 2516 CK The Hague (NL)
(72) Inventor: Vos, Wieger, Sanne, 1076 JJ Amsterdam (NL); Van den Bos, Aad, 2265 Leidschendam (NL)
(74) Representative: Wuyts, Koenraad Maria

(57) **Abstract**

The invention relates to a mobile telephone comprising a processor device and an antenna, the processor device being arranged for receiving signals from at least one network antenna via the antenna, the processor device further being arranged to generate a network measurement information comprising signal strengths of the signals received from the at least one network antenna and network antenna identifications from the at least one network antenna, characterized in that the processor device is arranged for transmitting the network measurement information to a central server.

## Description

### TECHNICAL FIELD

The invention relates to a mobile telephone and a method for providing positional information by such a mobile telephone. The invention further relates to a computer program, a data carrier, comprising such a computer program and a method of distributing such a computer program.

### STATE OF THE ART

Traffic information systems, such as TMC (Traffic Message Channel) and traffic management systems need accurate up-to-date traffic information.

In the prior art a number of systems for collecting traffic information is known, such as detection loops integrated in roads to detect the number of vehicles passing by. However, these are relatively expensive and complicated systems which involve relatively high maintenance costs. Therefore, other solutions were conceived.

According to other systems for collecting traffic information, floating car data are used. Such systems are based on a network antenna picking up signals from active mobile telephones (i.e. mobile telephones being involved in a telephone call) from which positional information of the mobile telephone can be deduced. Active mobile telephones can be monitored, i.e. it can be monitored via which network antenna the active mobile telephone communicates (so in which cell of the mobile network it is in). Consequently, it can also be monitored when such a mobile telephone travels to another network antenna (or new cell). Based on this, information about the velocity of the mobile telephone and thus the traffic can be deduced.

However, such prior art systems are relatively inaccurate as they only receive information from active telephones.

In principle it is possible to obtain more accurate positional information of an individual active mobile telephone by not only using the nearest mobile network antenna, but also use signals transmitted by the mobile telephone that are picked up by further network antennas. Triangulation techniques may be used to determine more accurate positional information of the mobile telephone. However, such an approach will use a lot of the network capacity making it less favourable for determining traffic information, which typically requires information from many mobile telephones.

It is an object of the invention to provide a solution that allows an improved way of obtaining positional information from mobile telephones and the like.

### SHORT DESCRIPTION

According to an aspect there is provided a mobile telephone comprising a processor device and an antenna, the processor device being arranged for receiving signals from at least one network antenna via the antenna, the processor device further being arranged to generate a network measurement information comprising signal strengths of the signals received from the at least one network antenna and network antenna identifications from the at least one network antenna, characterized in that the processor device is arranged for transmitting the network measurement information to a central server.

This provides a mobile telephone that can be used to generate positional information in a relatively easy way. Also, this allows collection of positional information from relatively many mobile telephones, so relatively accurate traffic information can be deduced. The traffic information may be used for accurate travel time prediction or estimated time of arrival prediction. The positional information of the individual mobile telephone may be also be used for pay-as-you-drive (road-pricing).

According to a further aspect there is provided a method for providing positional information by a mobile telephone to a central server, the method comprising
- receiving signals from at least one network antenna,
- generating a network measurement information comprising signal strengths of the signals received from the at least one network antenna and network antenna identifications from the at least one network antenna,
characterized by that the method further comprises
- transmitting the network measurement information to a central server.

According to a further aspect there is provided a computer program, when loaded on a mobile telephone, is arranged to perform the method above.

According to a further aspect there is provided a data carrier, comprising such a computer program.

According to a further aspect there is provided a method of distributing such a computer program, wherein the method comprises transmitting the computer program using an Over The Air message via an Over The Air (OTA) platform to a mobile telephone MT.

### SHORT DESCRIPTION OF THE DRAWINGS

Embodiments will now be described, by way of example only, with reference to the accompanying schematic drawings in which corresponding reference symbols indicate corresponding parts, and in which:
- Figure 1 schematically depicts a mobile telephone,
- Figure 2 schematically depicts a mobile telephone in a network, and
- Figure 3 and 4 schematically depict flow diagrams according to embodiments.

### DETAILED DESCRIPTION

First an exemplary description of a mobile telephone and a smart card will be provided.

### Mobile Telephone

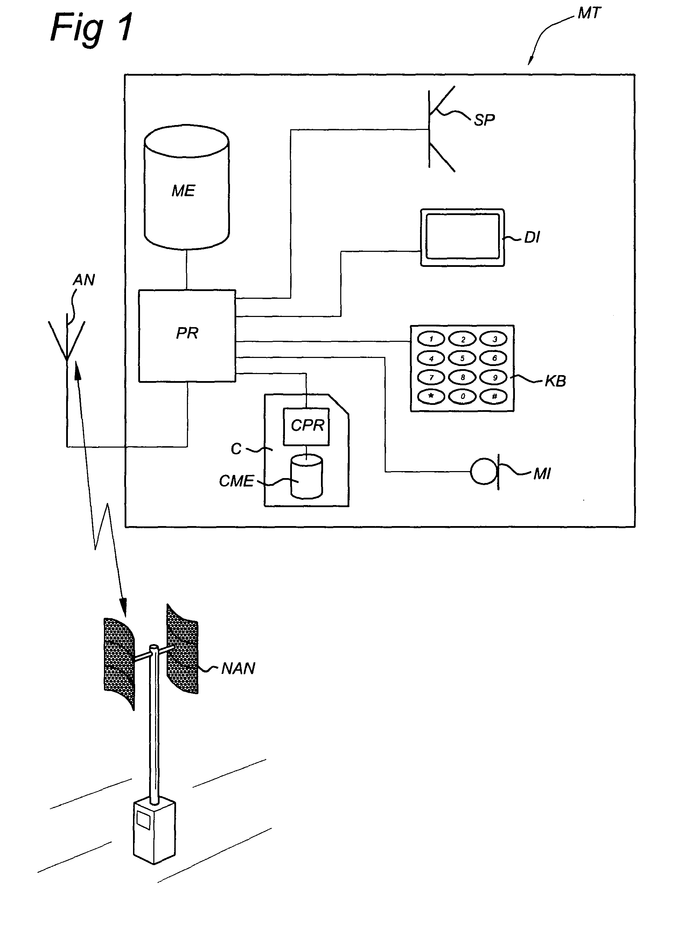

Fig. 1 schematically depicts a mobile telephone MT. The detailed description as given below also refers to any kind of computer device that is mobile and arranged to communicate wirelessly with a network. Examples of such computer devices are personal digital assistants (PDA), palmtops, car radios and the like. Figure 1 shows a schematic example of an embodiment of such a computer device.

Figure 1 shows a schematic block diagram of an embodiment of a mobile telephone MT, comprising a processor PR for performing arithmetical operations. The processor PR is connected to a memory ME arranged for storing instructions and data. The memory ME may be any type of memory such as a tape unit, hard disk, a Read Only Memory (ROM), Electrically Erasable Programmable Read Only Memory (EEPROM) and a Random Access Memory (RAM). The processor PR is also connected to one or more input and output devices, such as a keyboard KB, a speaker SP, a display DI and a microphone MI.

The mobile telephone MT may further comprise an antenna AN provided to allow wireless communication. This allows the processor to open a communication link with a network antenna NAN. The antenna is here shown as an external antenna, but it will be understood that the antenna AN may also be formed inside a housing of the mobile telephone MT. It will be understood that the antenna AN is shown and described in a general way and additional hardware may be provided to allow the antenna AN to function properly, as will be understood by a skilled person.

The network antenna NAN may be part of network such as a mobile telephone network, such as a GPRS network or UMTS network, allowing the mobile telephone MT to communicate with remote devices, such as remote mobile telephones MT.

The mobile telephone MT may further be arranged to receive and comprise a smart card C, such as a SIM card or the like, as will be further explained below. The mobile telephone MT may comprise a holder arranged for receiving the smart card C and to connect the processor PR to a card-memory CME and/or the card processor CPR. The mobile telephone MT may comprise input/output devices (not shown) to connect the mobile telephone MT to the card-memory CME and/or card-processor PR of the smart card C.

However, it should be understood that the mobile telephone MT may be provided with more and/or other memories, input devices, output devices, read devices etc. known to persons skilled in the art. Moreover, one or more of them may be physically located remote from the processor PR, if required. The processor PR is shown as one box, however, it may comprise several processors functioning in parallel or controlled by one main processor that may be located remote from one another, as is known to persons skilled in the art.

It is observed that, although all connections in Fig. 1 are shown as physical connections, one or more of these connections can be made wireless. They are only intended to show that "connected" units are arranged to communicate with one another in someway.

The mobile telephone MT is shown as a computer system, but can be any signal processing system with analog and/or digital and/or software technology arranged to perform the functions discussed here.

### Smart card

As described above, the mobile telephone MT may be arranged to receive and comprise a smart card C, such as a SIM-card or the like. The smart card may comprise a card memory CME and a card processor CPR. The card memory CME may comprise programming lines or instructions that are readable and executable by the card processor CPR or the processor PR of the mobile telephone MT, providing the mobile telephone MT with the functionality of the embodiments described here.

The mobile telephone MT may comprise a holder arranged for receiving the smart card C and to connect the processor PR of the mobile telephone MT with the card-memory CME and/or the card processor CPR.

The smart card C may for instance be a SIM-card (Subscriber Identity Module) or a USIM card (Universal Subscriber Identity Module). The smart card C comprises a unique code used to identify the mobile telephone MT in a network.

The smart card C may be arranged to perform some simple functionality, such as encryption and decryption algorithms and the card memory CME is arranged to store a plurality of contact information entries (name, telephone number) and messages (e.g. SMS-message).

As described above, the smart card C may comprise a card processor CPR and card memory CME (ROM, RAM, EEPROM). The smart card C may further comprise input/output devices (not shown) to connect the smart card C to the hardware of the mobile telephone MT itself. The mobile telephone MT and the smart card C are arranged to communicate with each other using a interface (e.g. the 3GPP TS 51.011 standard interface).

### Embodiments

The embodiments provided here may be integrated and performed by a mobile telephone. In fact, the mobile telephone MT may comprise a processor and a memory, where the memory comprises programming lines or instructions that are readable and executable by the processor providing the mobile telephone with the functionality of the embodiments described below.

According to an alternative, the mobile telephone may comprise a smart card, such as a SIM-card or the like, comprising a card-memory with programming lines or instructions that are readable and executable by the processor of the mobile telephone providing the mobile telephone with the functionality of the embodiments described below. The programming lines or instructions may first be copied to the memory of the mobile telephone before being executed.

According to a further alternative, the mobile telephone may comprise a smart card such as a SIM-card or the like, the SIM-card comprising a card-processor and a card-memory with programming lines or instructions that are readable and executable by the card-processor providing the mobile telephone with the functionality of the embodiments described below.

So based on the explanation above it will be understood that the embodiments described here may be performed by the hardware of the mobile telephone or the hardware provided on the smart card, or by a combination of both.

Therefore, the term processor device as used in this text refers to the processor PR as part of the mobile telephone MT or the card processor CPR or a combination of both. Accordingly, the term memory device as used in this text refers to the memory ME as part of the mobile telephone MT or the card memory ME or a combination of both.

The embodiments provided here are based on the insight that the mobile telephone MT itself does not only see the most nearby network antenna NAN, which will be referred to as the active antenna AN, but also sees approximately six further network antennas NAN. Information about the strength of the signals received by the active network antenna NAN and the further network antennas NAN is available to the mobile telephone. The information about the further network antennas NAN is usually stored in a so-called Network Measurement Report (NMR).

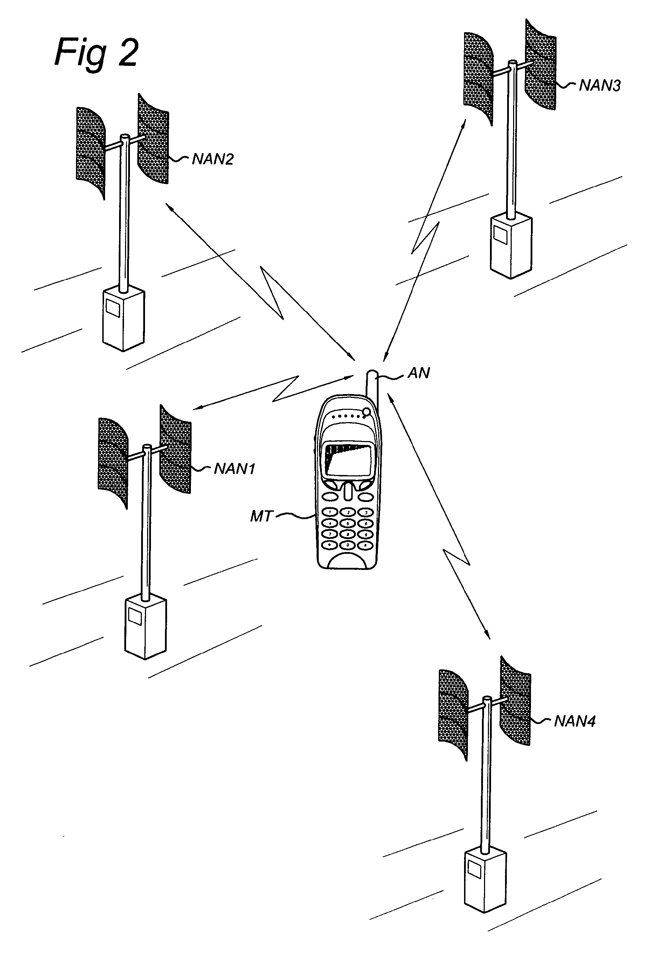

This is further explained in Fig. 2, schematically showing a mobile telephone MT being positioned in a mobile network, such as a GPRS network or UMTS network. The mobile network comprises a plurality of network antennas NAN, in Fig. 2 numbered NAN1, NAN2, NAN3, NAN4 respectively. The mobile telephone MT is arranged to receive signals from at least one network antenna, in this example four network antennas NAN1, NAN2, NAN3, NAN4 via antenna AN. The signals received from the network antennas NAN may comprise network antenna identifications to enable the mobile telephone MT to distinguish between the different network antennas. The mobile telephone MT is arranged to determine signal strengths of signals received from the network antennas NAN1, NAN2, NAN3, NAN4 and store these as network measurement information.

As in Fig. 2 the first network antenna NAN 1 is closest to the mobile telephone MT, the signal strength of the signals received from this first network antenna NAN1 is likely to be the highest. Therefore, when a communication link is established between the mobile telephone MT and the mobile network, the communication link will be established via the first network antenna NAN1, also referred to as the active network antenna. The network measurement information may be used to monitor the signal strengths of the respective network antennas NAN and decide when the first network antenna NAN1 is no longer to be used for establishing a communication link with, but for instance the second network antenna NAN2 is to be used instead.

So, a mobile telephone is provided, comprising a processor device and an antenna, the processor device being arranged for receiving signals from at least one network antenna via the antenna, the processor device further being arranged to generate network measurement information comprising signal strengths of the signals received from the at least one network antenna and network antenna identification from the at least one network antenna, wherein the processor device is arranged for transmitting the network measurement information to a central server.

The network measurement information comprises an indication of the strengths of the signals received from the at least one network antenna. Such network measurement information may be stored in the memory of the mobile telephone MT and may comprise the network antenna identification and the corresponding signal strength:

| | Network antenna identification | Signal strength [- dB] |
|---|---|---|
| **1.** | NAN1 | 10 |
| **2.** | NAN2 | 47 |
| **3.** | NAN3 | 39 |
| **4.** | NAN4 | 58 |
| **5.** | NAN5 | 23 |
| **6.** | NAN6 | 14 |
| **7.** | NAN7 | 22 |

Of course, the network measurement information may comprise any suitable number of entries corresponding to the number of network antennas from which signals are received. For instance, the network measurement information may comprise 7 entries, i.e. one of the first network antenna NAN1 that would be used for establishing communication links, and six further surrounding network antennas (e.g. the Network Measurement Report). In that case the network measurement information may comprise 14 parameters.

So, according to an embodiment, the network measurement information may comprise the traditional Network Measurement Report and possibly further information about the active network antenna.

It will be understood that the signal strengths are an indication of the distance between the mobile telephone MT and the respective network antenna NAN. As the positions of the network antennas NAN are known, the indications of the signal strengths or at least the ratio between the indications of the signal strengths as comprised by the network measurement information, may be used to determine the position of the mobile telephone MT.

So, the mobile telephone MT is arranged to transmit the determined signal strengths and network antenna identifications to a central server. Or, more generally speaking, the mobile telephone MT is arranged to transmit the network measurement information to a central server.

According to the embodiments described here, the network measurement information is sent to a central server based on which the network server can compute relatively accurate positional information of the mobile telephone MT.

According to an embodiment, the processor device PR, CPR is further arranged to transmit the network measurement information to a central server when being in an idle state and/or being in an active state.

The mobile telephone MT may be arranged to transmit the network measurement information to the central server when being in an active state and/or when being in an idle state (i.e. not participating in a telephone call or the like), the mobile telephone MT provides the central server with continuous positional information (i.e. every predetermined time interval). By doing this, the central server receives relatively much positional information form many mobile telephones MT, allowing it to compute more accurate traffic information.

Since idle mobile telephones MT are also arranged to transmit positional information (e.g. network measurement information), relatively much positional information is received by the central server. Information can be obtained from the idle (or active) mobile telephones MT without active connection or active polling. For polling, knowledge is required about the relevant mobile telephones to poll as on average only 3% of the mobile telephones are on the move. Determining these 3% is difficult if the mobile telephones are in the idle state. Therefore, these embodiments provide a solution in which the mobile telephones decide if they are on the move themselves. As a result, little network capacity is used.

Using network measurement information from idle mobile telephones does not only mean that more data is made available, but also has the advantage that more accurate data is received as idle mobile telephones can determine more accurate network measurement information than active mobile telephones.

In fact, according to an embodiment, the mobile telephone may be arranged not to transmit network measurement information when active.

In the paragraphs below a number of further embodiments are described that may be employed alone or in combination with each other.

According to an embodiment the network measurement information further comprises timing information about the time the signal strengths were determined. Therefore, the mobile telephone MT may be arranged to provide timing information, i.e. add timing information to the network measurement information. This information may be used by the central server to compute travelling speeds of the mobile telephone MT by comparing successively received network measurement information from the same mobile telephone MT. According to this embodiment, the network measurement information may be as follows:

| | Network antenna identification | Signal strength **[-dB]** |
|---|---|---|
| **1.** | NAN1 | 10 |
| **2.** | NAN2 | 47 |
| **3.** | NAN3 | 39 |
| **4.** | NAN4 | 58 |
| **5.** | NAN5 | 23 |
| **6.** | NAN6 | 14 |
| **7.** | NAN7 | 22 |
| Time of measurement: AM 11:28:34 | | |

This information may be obtained from a clock as present in most mobile telephones MT. According to an embodiment, the timing information may comprise two timestamps: the relative time as available in the mobile telephone MT (for instance obtained from the clock as present in the mobile telephone MT) as well as the absolute time determined by the network. The relative time may be used to determine relative timing of the various measurements. The absolute time may be used to determine if the information is still up to date.

In case the network measurement information does not comprise timing information, the time the network measurement information is received at the server may be used.

According to an embodiment the at least one network antenna NAN belongs to a first mobile network and the processor device PR, CPR is further arranged for receiving signals from at least one further network antenna belonging to a further mobile network, wherein the network measurement information further comprises signal strengths of the further signals received from the at least one further network antenna and further network antenna identifications from the at least one further network antenna.

By using information from more than one mobile network, more information can be collected and more accurate positional information can be obtained. So, according to an example, the first mobile network may be a GMTS network, where the further mobile network may be one of a UMTS, WiFi, WiMax network.

According to an embodiment, the network measurement information is transmitted to the central server via a predetermined communication link, such as for instance by sending a SMS message using a SMS platform. Furthermore, the USSD communication channel may be used for transmitting the network measurement information. This has the advantage that network capacity is used more efficiently. Also, a predetermined communication link as USSD may be used as it does not involve billing platforms.

According to an embodiment, the processor device is arranged to perform a movement detection action and only transmit the network measurement information when movement is detected.

The mobile telephone MT only needs to send its network measurement information to the central server when actually participating in traffic or when it is actually moving. So, when the mobile telephone MT is not moving, no network measurement information is transmitted, to avoid transmission of unnecessary data to the central server.

Therefore, an activation mechanism may be provided for starting operation of the application in case movement is detected.

So, according to this embodiment, the mobile telephone MT is arranged to determine the current cell it is, i.e. the network antenna identification of the active network antenna. As long as no significant variation of the active network antenna is determined, no network measurement information is transmitted to the central server.

Different criteria for deciding if a significant variation is determined may be conceived. For instance, in case more than a predetermined amount of changes (e.g. 4 changes) are detected in a predetermined period of time (e.g. 30 min.), the mobile telephone MT starts transmitting network measurement information to the central server. This mechanism prevents large amounts of data to be sent before the mobile telephone MT is moving.

According to a further embodiment, a de-activation mechanism may be provided for stop transmitting network measurement information.

According to an example, the operation is de-activated in case no movement is detected anymore.

Different criteria for deciding if a mobile telephone has stopped moving may be conceived. For instance, in case less than a predetermined amount of changes (e.g. 4 changes) are detected in a predetermined period of time (e.g. 30 min.), the mobile telephone MT stops transmitting network measurement information to the central server. This mechanism prevents large amounts of data to be sent after the mobile telephone MT has come to a stop.

In order to determine if the mobile telephone is moving it can be checked if the active network antenna is changing or not. Also, the change of the (total) detected set of network antennas or a subset of the detected set, e.g. the two strongest may be determined.

According to a further example, the operation is de-activated when the network measurement information can not be sent to the central server. For instance, in case the dedicated communication link described above is disabled or out of operation, no further attempts to transmit the network measurement information to the central server are done. So, a de-activation mechanism is provided for stopping operation when for instance no SMS-messages can be transmitted and the application may go in a sleep-mode.

According to an embodiment, the processor device is arranged to only transmit network measurement information when certain transmission criteria are met.

For instance, when the network measurement information is transmitted to the central server by means of a SMS-message, the transmission criteria may comprise the requirement that a SMS-message is transmitted only once sufficient data is available for filling an SMS-message. This ensures that relatively few messages are transmitted and the available transmission capacity is used in an efficient way.

According to a further example, the transmission criteria may comprise the requirement that no network measurement information is transmitted to the central server when it is detected that the mobile telephone MT is not in a predetermined country, e.g. the home country. This may be done by checking the country code of the current location.

According to a further example, the transmission criteria may comprise the requirement that no network measurement information is transmitted to the central server when it is detected that the mobile telephone MT detects that the received signals from the at least one network antenna are originating from a network from a different provider than the provider associated with the mobile telephone MT (smart card C). This may be detected by observing the Mobile network code (MNC).

According to a further example, the transmission criteria comprise a sanity check of the network measurement information to decide if that particular network measurement information is to be transmitted to the central server. This prevents non-useful information from being transmitted, such as for instance an empty NMR measurement.

According to an embodiment, the generation and the transmission of the network measurement information is done "underwater", i.e. without user interaction. Everything may be done without being visible or noticeable for a user of the mobile telephone MT. While the application as described in the embodiments is active in the mobile telephone MT, the user is not disturbed in the normal use. So, according to this embodiment, the connection with the graphical user interface is disabled for this tool.

According to an embodiment, the processing device PR, CPR is arranged to receive and process control messages to allow controlling of the application by a remote party, such as the central server. The control message may be a SMS-message via an SMS-platform or may be an Over The Air message via an Over The Air (OTA) platform. The control messages can be used to change the code of the application. Of course, any other suitable kind of message may be used.

The control message may comprise a sleep instruction. The sleep instruction may put the application as described in the embodiments to sleep, such that it no longer transmits network measurement information to the central server and possibly also no longer generates network measurement information.

The control message may comprise a wake-up instruction. The wake-up instruction may wake up the application as described in the embodiments, such that it starts transmitting network measurement information to the central server and possibly also starts generating network measurement information, if not already the case.

The control message may comprise a kill instruction. The kill instruction may stop the application as described in the embodiments, such that it no longer transmits network measurement information to the central server and possibly also no longer generates network measurement information. The kill instruction has the effect that the application is stopped permanently and can no longer be activated.

The control message may comprise an instruction to change parameters. The control message may for instance comprise instructions to change the time interval between generating network measurement information. Also, the control message may comprise instructions to change transmission criteria as described above.

According to a further embodiment, the processing device PR, CPR may be arranged to perform a self-test procedure for testing the functioning of the mobile telephone MT. Before starting a number of checks can be performed to ensure that the application will work properly in the specific environment. This may be done when the mobile telephone MT is switched on. Before starting the application as described in the embodiments, the self-test procedure may be executed to make sure the mobile telephone MT works properly.

### Flow diagram

The embodiments described above may be provided in the form of a computer program that is loadable on a mobile telephone to provide the mobile telephone with the functionality as described. The computer program may be provided on a data carrier as described above. The data carrier may be a memory provided on a smart-card. The smart card may be one of a SIM-card and a USIM card.

The computer program may be readable and executable by the processor device PR, CPR to perform one of the methods described below.

According to an embodiment, the method is for providing positional information by a mobile telephone to a central server, the method comprising
- receiving signals from at least one network antenna,
- generating a network measurement information comprising signal strengths of the signals received from the at least one network antenna and network antenna identifications from the at least one network antenna. The method further comprises
- transmitting the network measurement information to a central server.

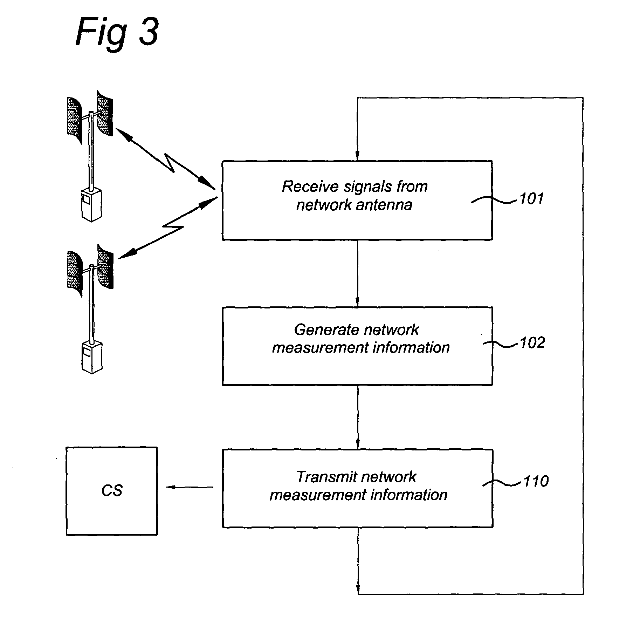

Fig. 3 shows a flow diagram further explaining this method. In a first action 101 signals are received from at least one network antenna. In a second action 102, the network measurement information comprising signal strengths of the signals received from the at least one network antenna and network antenna identifications from the at least one network antenna is generated. Finally in action 110, the network measurement information is transmitted to a central server CS.

According to an embodiment the method is performed by the mobile telephone while being in an idle state.

According to an embodiment generating network measurement information comprises adding timing information about the time the signal strengths were determined to the network measurement information.

According to an embodiment the method further comprises receiving signals from at least one further network antenna belonging to a further mobile network, wherein the network measurement information further comprises signal strengths of the further signals received from the at least one further network antenna and further network antenna identifications from the at least one further network antenna.

According to an embodiment transmitting the network measurement information to a central server is done via a dedicated communication link.

According to an embodiment the method further comprises performing a movement detection action and the network measurement information is only transmitted to the central network when movement is detected.

According to an embodiment the method further comprises checking de-activation criteria and transmitting network measurement informations is stopped when the de-activation criteria are met.

According to an embodiment the method further comprises checking transmission criteria and transmitting network measurement informations is only done when the transmission criteria are met.

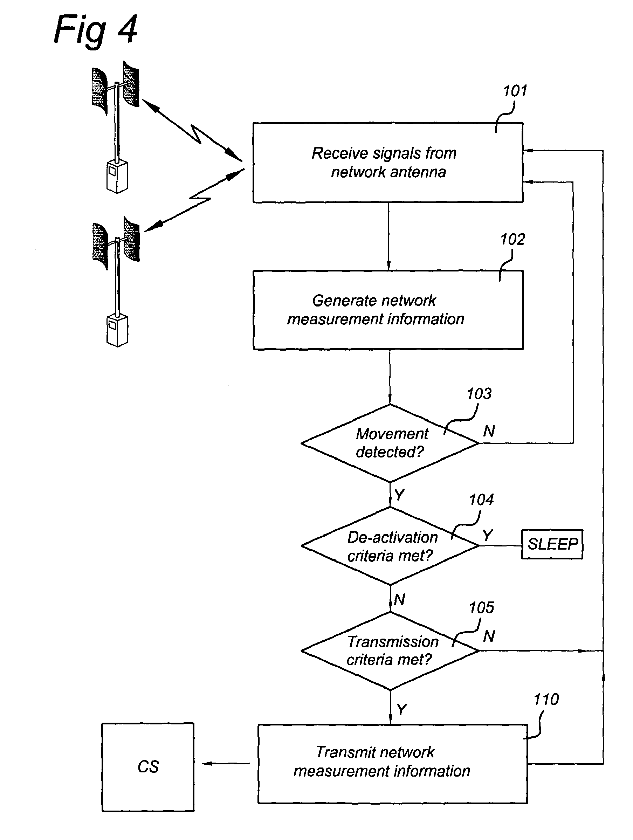

Fig. 4 depicts a more detailed flow diagram comprising some further embodiments. According to Fig. 4, after action 102, the processing device PR, CPR continues to action 103 in which a movement detection action is performed. In case no movement is detected (or not sufficient movement), the processing device PR, CPR returns to action 101. If movement is detected, the processing device PR, CPR continues to action 104.

In action 104 the processing device PR, CPR checks de-activation criteria as described in more detail above. In case de-activation criteria are met, the processing device PR, CPR puts the application in a sleep modus. If the de-activation criteria are not met, the processing device PR, CPR continues with action 105.

In action 105 the above described transmission criteria are checked. In case the transmission criteria are not met, the processing device PR, CPR returns to action 101. If case the transmission criteria are met, the processing device PR, CPR continues to action 110.

According to an embodiment the method the generation and the transmission of the network measurement information is done "underwater", i.e. without user interaction.

According to an embodiment the method is performed by a processor device comprised by the mobile telephone, the processor device being formed by a processor (PR) comprised by the mobile telephone (MT) and a card processor (CPR) comprised by the smart card (C).

According to an embodiment, the application itself as described in the embodiments may be distributed to the mobile telephone MT via a distribution message, such as an Over The Air message. The mobile telephone MT may therefore be arranged to receive a distribution message. A distribution message may be used for example, when a new mobile telephone is added to the platform.

The descriptions above are intended to be illustrative, not limiting. Thus, it will be apparent to one skilled in the art that modifications may be made to the invention as described without departing from the scope of the claims set out below.

## Claims

1. Mobile telephone comprising a processor device and an antenna, the processor device being arranged for receiving signals from at least one network antenna via the antenna, the processor device further being arranged to generate a network measurement information comprising signal strengths of the signals received from the at least one network antenna and network antenna identifications from the at least one network antenna, **characterized in that** the processor device is arranged for transmitting the network measurement information to a central server.

2. Mobile telephone according to claim 1, the processor device further being arranged to transmit the network measurement information to a central server when being in an idle state and/or being in an active state.

3. Mobile telephone according to any one of the preceding claims, wherein the network measurement information further comprises timing information about the time the signal strengths were determined.

4. Mobile telephone according to any one of the preceding claims, wherein the at least one network antenna belongs to a first mobile network and the processor device is further arranged for receiving signals from at least one further network antenna belonging to a further mobile network, wherein the network measurement information further comprises signal strengths of the further signals received from the at least one further network antenna and further network antenna identifications from the at least one further network antenna.

5. Mobile telephone according to any one of the preceding claims, wherein the network measurement information is transmitted to the central server via a dedicated communication link.

6. Mobile telephone according to any one of the preceding claims, wherein the processor device is arranged to perform a movement detection action and the network measurement information is only transmitted to the central network when movement is detected.

7. Mobile telephone according to any one of the preceding claims, wherein de-activation mechanism is provided to stop transmitting network measurement information.

8. Mobile telephone according to any one of the preceding claims, wherein the processor device is arranged to only send network measurement information when certain transmission criteria are met.

9. Mobile telephone according to any one of the preceding claims, wherein the generation and the transmission of the network measurement information is done "underwater", i.e. without user interaction.

10. Mobile telephone according to any one of the preceding claims, wherein the mobile telephone is arranged to receive a smart card, and the processor device is formed by a processor (PR) comprised by the mobile telephone (MT) and a card processor (CPR) comprised by the smart card (C).

11. Method for providing positional information by a mobile telephone to a central server, the method comprising
- receiving signals from at least one network antenna,
- generating a network measurement information comprising signal strengths of the signals received from the at least one network antenna and network antenna identifications from the at least one network antenna,
**characterized by** that the method further comprises
- transmitting the network measurement information to a central server.

12. Method according to claim 11, wherein the method is performed by the mobile telephone while being in an idle state.

13. Method according to any one of the claims 11 - 12, wherein generating network measurement information comprises adding timing information about the time the signal strengths were determined to the network measurement information.

14. Method according to any one of the claims 11 - 13, wherein the method further comprises
- receiving signals from at least one further network antenna belonging to a further mobile network, wherein the network measurement information further comprises signal strengths of the further signals received from the at least one further network antenna and further network antenna identifications from the at least one further network antenna.

15. Method according to any one of the claims 11 - 14, wherein transmitting the network measurement information to a central server is done via a dedicated communication link.

16. Method according to any one of the claims 11 *-* 15, wherein the method further comprises performing a movement detection action and the network measurement information is only transmitted to the central network when movement is detected.

17. Method according to any one of the claims 11 - 16, wherein the method further comprises checking de-activation criteria and transmitting network measurement information is stopped when the de-activation criteria are met.

18. Method according to any one of the claims 11 - 17, wherein the method further comprises checking transmission criteria and transmitting network measurement information is only done when the transmission criteria are met.

19. Method according to any one of the claims 11 - 18, wherein the generation and the transmission of the network measurement information is done "underwater", i.e. without user interaction.

20. Method according to any one of the claims 11 - 19, wherein the method is performed by a processor device comprised by the mobile telephone, the processor device being formed by a processor (PR) comprised by the mobile telephone (MT) and a card processor (CPR) comprised by the smart card (C).

21. Computer program, when loaded on a mobile telephone, is arranged to perform any one of the methods according to claims 11 - 20.

22. Data carrier, comprising a computer program according to claim 21.

23. Data carrier according to claim 22, wherein the data carrier is a memory provided on a smart-card.

24. Data carrier according to claim 23, wherein the smart card is one of a SIM-card and a USIM card.

25. Method of distributing a computer program according to claim 21, wherein the method comprises transmitting the computer program using an Over The Air message via an Over The Air (OTA) platform to a mobile telephone MT.
